# EUROPÄISCHE PATENTANMELDUNG

(11) **EP 1 422 051 A1**
(43) Veröffentlichungstag der Anmeldung: **26.05.2004**
(21) Anmeldenummer: 03405838.8
(22) Anmeldetag: 24.11.2003
(51) Int. Cl.: B31B 1/64, B31B 3/64, B29C 65/02, B29C 65/74

(54) **Verfahren und Vorrichtung zum Herstellen von Schachteln aus thermoplastischen Kunststoffplatten**

(30) Priorität: 25.11.2002 CH 19792002
(71) Anmelder: Texa AG, 7023 Haldenstein (CH)
(72) Erfinder: Benz, Gottlieb, 8890 Flums (CH)
(74) Vertreter: Patentanwälte Feldmann & Partner AG

(57) **Zusammenfassung**

Um unter Reinraumbedingungen Tuben in Schachteln aus Kunststoff abzupacken, wird ein Verfahren und eine Vorrichtung geschaffen, bei dem die Schachteln aus thermoplastischen Kunststoffplatten in der Abpacklinie zusammengeschweisst werden.

Zur Erstellung der Schweissverbindungen (10) werden eine Lasche (8) und eine benachbarte Seitenwand (9) zwischen zwei nicht beheizte Andrückplatten (22, 23) gehalten und mittels fingerförmigem Schweissstempel (40) durch eine der beiden Andrückplatten (22) hindurch verschweisst.

## Beschreibung

Die vorliegende Erfindung betrifft ein Verfahren zum Herstellen von Schachteln, insbesondere unter Reinraumbedingungen in einer Tubenabpacklinie, die aus stranggepressten, mindestens zwei Folienlagen mit dazwischen verlaufenden Stegen aufweisenden thermoplastischen Kunststoffplatten bestehen, und die weiteren Merkmale des Oberbegriffs des Patentanspruches 1 aufweisen. Ferner umfasst die Erfindung eine Vorrichtung, um dieses Verfahren durchführen zu können.

Anlagen zur Herstellung von tuben- oder hülsenförmigen Hohlkörpern, die sich zum Füllen mit pastösen und fluiden Mitteln eignen, arbeiten mit hoher Produktivität und liefern die hergestellten Tuben oder Hülsen kontinuierlich an. Anschliessend an diese Produktionsstrassen folgen Vorrichtungen, mittels derer die kontinuierlich oder diskontinuierlich anfallenden Tuben oder Hülsen gruppiert und lagenweise in Schachteln abgelegt werden. Solche Gruppierund Abpackvorrichtungen sind beispielsweise aus der US-A-5,339,606, der FR-A-2'391'126 oder der US-A-5,060,454 bekannt. Des weiteren sind ähnliche Maschinen auch aus der US-A-5,732,536, der DE-22'00'390 A oder auch der EP-A-1'123'867 bekannt.

Immer häufiger wird verlangt, dass sowohl die Herstellung als auch das Abpacken solcher Hülsen oder Tuben, die nachher mit pharmazeutischen Produkten oder Lebensmitteln gefüllt werden, unter Reinraumbedingungen geschehen. Das Abpacken erfolgt heute noch mehrheitlich in Kartonschachteln. Es hat sich jedoch gezeigt, dass die Abpackung in Kartonschachteln problematisch ist. Die Kartonschachteln enthalten relativ einen grossen Anteil an Papierstaub, der nicht zu vermeiden ist. Tuben oder Hülsen, die aus Kunststoff oder Kunststofflaminaten hergestellt sind, weisen nach der Herstellung eine statisch geladene Oberfläche auf, die zwangsläufig dazu führt, dass sie den herumwirbelnden Staub anzieht und sich dieser auf den Oberflächen der Hülsen oder Tuben absetzt.

Dieses Problem ist erkannt worden, und immer mehr Abfüller von pharmazeutischen Produkten oder Lebensmitteln verlangen nun, dass die Tuben oder Hülsen in Kunststoffschachteln abgepackt werden.

Solche Kunststoffschachteln werden gleich wie die Kartonschachteln als zugeschnittene Bögen angeliefert und in der Abpackstrasse vollautomatisch gefaltet und verklebt. Für solche Kunststoffschachteln ist ein thermoplastisches Kunststoffmaterial in Plattenform erhältlich, welches ähnlich den sonst üblicherweise verwendeten Kartonschachteln dem Wellkarton nachempfunden gefertigt ist. Dieses Kunststoffplattenmaterial besteht aus mindestens zwei Folienlagen mit dazwischen verlaufenden Stegen. Solches Material lässt sich mittels Strangpressen endlos fertigen.

Der Zuschnitt aus thermoplastischen Kunststoffplatten umfasst eine rechteckige Boden- oder Deckfläche und an den Seitenkanten angeordnete Seitenwände, wobei zwei einander gegenüberliegende Seitenwände mit Laschen versehen sind, die im fertigen Zustand die jeweils benachbarten laschenfreien Seitenwände mittels ihrer Laschen überlappen. Bisher werden diese Laschen mittels eines Heissklebers an die Seitenwände geklebt. Diese Heissklebestationen sind ausgesprochen teuer und führen oftmals zu Störungen, wenn, durch irgendwelche Umstände bedingt, die Anlage zu einem längeren Stillstand kommt. Besonders problematisch ist jedoch, dass der Heisskleber zu Ausdünstungen führt, die in einer Fertigung unter Reinraumbedingungen eigentlich nicht zulässig wären. Trotzdem wurde bis heute noch dieser Umstand toleriert.

Es ist daher die Aufgabe der vorliegenden Erfindung, ein Verfahren und eine Vorrichtung zur Durchführung des Verfahrens zu schaffen, bei denen Schachteln aus stranggepressten, mindestens zwei Folienlagen mit dazwischen verlaufenden Stegen aufweisenden thermoplastischen Kunststoffplatten aus einem Zuschnitt gefertigt werden können, so dass sie die Reinraumbedingungen besser als heute bekannt erfüllen können.

Diese Aufgabe löst ein Verfahren mit den Merkmalen des Patentanspruches 1.

Eine Vorrichtung, die nach diesem erfindungsgemässen Verfahren arbeiten kann, weist die Merkmale des Patentanspruches 4 auf. Weitere vorteilhafte Verfahrensschritte gehen aus den Ansprüchen 2 und 3 hervor, während weitere vorteilhafte Ausgestaltungsformen der erfindungsgemässen Vorrichtung aus den abhängigen Ansprüchen 5 bis 15 hervorgehen.

Bei den vom Anmelder durchgeführten Versuchen hat es sich gezeigt, dass die flächige Verschweissung von Lasche und Seitenwand im Ueberlappungsbereich sich nicht flächig machen lässt. Dabei entstehen einerseits zu grosse Verformungen bei der fertigen Schachtel, und andererseits ist die Fertigungsund Abkühlzeit zu lang. Insbesondere die Verformung der fertigen Schachtel führt dazu, dass die in der Schachtel abgepackten Tuben oder Hülsen sich verschieben können und die Ordnung der abgepackten Tuben oder Hülsen durcheinander geraten kann. Dies führt zu unzulässigen Schwierigkeiten bei der späteren Abfüllstation.

Erst durch das hier aufgezeigte Konzept mit den fingerförmigen Schweissstempeln und den entsprechenden Vorkehrungen, die eine möglichst geringe Wärmeenergieübertragung auf die Schachteln bewirken, konnte das gewünschte Resultat erzielt werden.

In der Zeichnung ist schematisch die erfindungsgemässe Vorrichtung gezeigt, an Hand derer auch das Verfahren beschrieben wird. Es zeigt:
- Figur 1: die erfindungsgemässe Vorrichtung während der Fertigung einer Schachtel;
- Figur 2: eine perspektivische Teilansicht einer nach dem erfindungsgemässen Verfahren hergestellten Schachtel und
- Figur 3: einen Teilschnitt der Schachtel nach Figur 2 im Bereiche einer Schweissverbindung;
- Figur 4: zeigt einen teilweise geschnittenen Schweissstempel, wie er bei der erfindungsgemässen Vorrichtung zur Anwendung kommt.

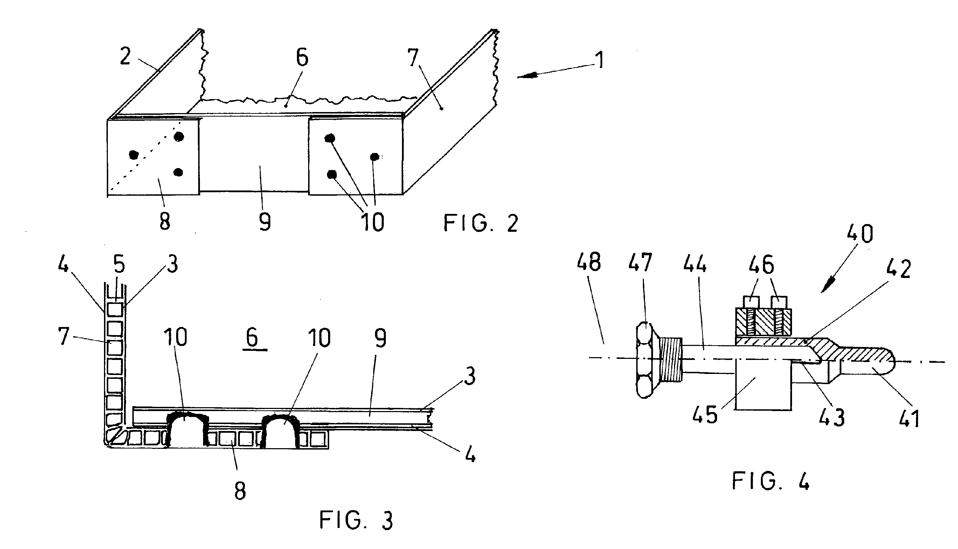

Zum besseren Verständnis wird vorerst mit Bezug auf die Figuren 2 und 3 auf das bei der Erfindung zur Anwendung gelangende thermoplastische Kunststoffplattenmaterial eingegangen und die daraus gefertigte Schachtel 1 beschrieben. Die eigentliche Kunststoffplatte 2 aus thermoplastischem Kunststoff wird üblicherweise stranggepresst endlos gefertigt. Das Material hat in der hier dargestellten Ausführung eine obere Kunststofffolienlage 3 und eine parallel dazu verlaufende untere Folienlage 4. Zwischen diesen beiden Folienlagen verlaufen Stege 5, welche die beiden Folienlagen verbinden. Obwohl hier lediglich eine Ausführung aus zwei Folienlagen beschrieben ist, lassen sich selbstverständlich auch Kunststoffplatten verwenden, die drei oder noch mehr Folienlagen haben und jeweils dazwischen verbindende Stege. Hierbei bleiben jedoch aus fertigungstechnischen Gründen die Stege 5 immer parallel und in derselben Verlaufsrichtung angeordnet.

Aus diesem hier oben beschriebenen Material werden Zuschnitte angeliefert, welche die Form der zu erstellenden Schachtel bestimmen. Diese Zuschnitte haben jeweils eine Boden- oder Deckfläche 6 mit an allen Seitenkanten angeformten Seitenwänden 7 und 9. Während zwei einander gegenüberliegende Seitenwände 7 jeweils mit daran anhängenden Laschen 8 versehen sind, sind die beiden anderen einander gegenüberliegenden Seitenwände 9 laschenfrei. Die Seitenwände 7 sind um die Dicke der Kunststoffplatte 2 länger als die Seitenkante der anschliessenden Boden- oder Deckfläche 6. Dies ist erforderlich, damit die Laschen 8 senkrecht umgebogen werden können und planparallel auf die entsprechende angrenzende laschenfrei Seitenwand 9 zu liegen kommen. Die Laschen 8 sind über die Verbindungen 10, welche eigentliche Schweissstellen sind, an der laschenfreien Seitenwand 9 befestigt. Auf die eigentliche Ausgestaltung der Verbindung 10 wird später nochmals eingegangen.

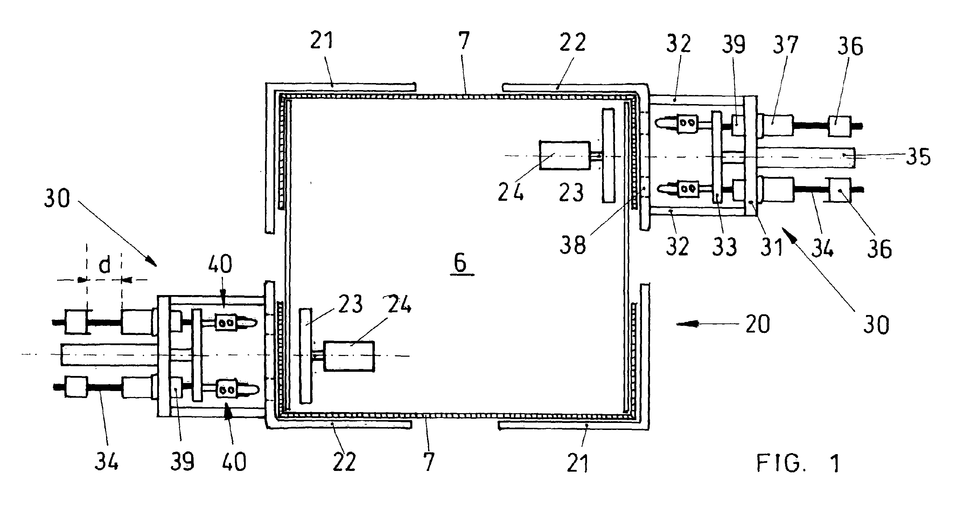

Zur Fertigung der Schachtel 1 dient die in der Figur 1 schematisch dargestellte Vorrichtung 20. Hierbei handelt es sich wie bereits erwähnt um eine rein schematische Darstellung unter Weglassung jener Teile, die ohnehin auch bei Maschinen, die Kartonschachteln fertigen, oder bei Vorrichtungen, die Kunststoffschachteln aus dem hier beschriebenen Material auf die herkömmliche Methode mittels Heissklebestationen fertigen, vorhanden sind. Hierbei kommen die Zuschnitte, die mittels mehrerer Sauger gefasst werden, in die Vorrichtung, und mittels entsprechender Leit- und Führungsbleche werden sie praktisch ohne aktive Bewegungsmittel lediglich durch den Vorschub in die korrekt gefaltete Lage gebracht. Hierbei werden die bereits korrekt gefalteten Seitenwände der Schachtel durch Führungs- und Haltewinkelformbleche 21 in der korrekten Form gehalten. Im Prinzip können diese Führungs- und Haltewinkelformbleche 21 auch gleichzeitig die Andruckplatte 22 für die Aussenwände sein. Dies ist jedoch nicht zwingend und selbstverständlich können die Andruckplatten 22 auch gesonderte Elemente sein.

Während in der Zeichnung hier zwei einander etwa diagonal gegenüberliegende Schweisseinheiten 30 dargestellt sind, ist dies selbstverständlich lediglich eine bevorzugte Ausführungsvariante, welche sich platzbedingt besonders günstig realisieren lässt. Selbstverständlich erfolgt dann nach einem weiteren Vorschub eine zweite Verschweissung an einer zweiten Stelle, wobei dort die Schweisseinheiten 30 wiederum diagonal angeordnet sind, jedoch so, dass sie dann die beiden noch nicht verschweissten Laschen an die entsprechenden Seitenwände anschweissen können. Müssen jedoch besonders grosse Schachteln hergestellt werden, so kann bereits die einzige Station alle vier Schweisseinheiten aufweisen. In ähnlicher Ueberlegung lassen sich selbstverständlich auch kleinere Schachteln fertigen, wobei man dann lediglich eine Schweisseinheit pro Station vorsieht und entsprechend eben vier solche Stationen in Reihe hintereinander anordnen muss.

Das bereits erwähnte Platzproblem stellt sich jedoch nicht nur wegen der Schweisseinheiten, sondern vielmehr wegen der im Innenbereich der Schachtel zu liegen kommenden Andruckeinheiten, die aus der Andruckplatte 23, welche an die Innenwand zum Anliegen kommt, und einem entsprechenden Andruckzylinder 24 bestehen.

Besonders vorteilhaft lässt sich jedoch die erfindungsgemässe Vorrichtung so realisieren, dass man in einem ersten Schritt lediglich die beiden einander direkt gegenüberliegenden Laschen an den beiden einander gegenüberliegenden laschenfreien Seitenwänden anschweisst und erst nach diesem Schritt die vollständige Faltung vornimmt und anschliessend die beiden übrigen Laschen anschweisst. Für die eigentliche Erfindung ist jedoch die zu wählende Vorgehensweise bei der Schachtelbildung von sekundärer Bedeutung.

Die eigentliche Erfindung liegt in der speziellen Fertigung der Schweissverbindung. Hierzu wird nunmehr die Schweisseinheit 30 beschrieben. Die Schweisseinheit 30 ist mittels seitlicher Träger 32 fest auf die ortsfeste Andruckplatte 22, welche auf den Aussenwänden der Schachtel anliegt, montiert. Hierbei ist sie bei Andruckplatten, die winkelförmig gestaltet sind, auf jenem Schenkel angebracht, der auf die entsprechende Lasche zum Anliegen kommt. Die seitlichen Träger 32, welche wie erwähnt auf der Andruckplatte 22 fest montiert sind, tragen eine Jochplatte 31, welche vorteilhafterweise mindestens annähernd parallel zum entsprechenden Schenkel der Andruckplatte 22 verläuft. Diese Jochplatte 31 wird durch Führungsstangen 34, die in Buchsen 39 gleitend lagern, durchsetzt. An den zur Schachtel hin weisenden Enden der Führungsstangen 34 ist ein Schweissstempelträger 33 befestigt. Der Schweissstempelträger 33 ist im Prinzip wiederum eine Platte, welche parallel zur Jochplatte 31 verläuft. Der Schweissstempelträger 33 lässt sich mittels einer Kolbenzylindereinheit 35, die an der Jochplatte 31 befestigt ist, in Richtung zur Andruckplatte 22 bewegen.

Auf den bereits erwähnten Führungsstangen 34 sind verstellbare Anschläge 36 angebracht. Dies kann beispielsweise so realisiert sein, dass die Führungsstangen 34 einseitig mit einem Gewinde versehen sind, auf dem die verstellbaren Anschläge 36 schraubbar verschieblich sind. Sie lassen sich beispielsweise mittels einer entsprechenden, hier nicht dargestellten, Kontermutter in der Endlage fixieren.

Die Führungsstangen durchsetzen ebenso auf der Jochplatte 31 angeordnete feste Gegenanschläge 37. Die Distanz d zwischen den beiden Anschlägen ergibt den Vorschubweg der Schweissstempel beziehungsweise des Schweissstempelträgers 33. Mittels dieser Anschläge lassen sich die bei hydraulischen Vorschubbewegungen sonst eventuell auftretenden Ungenauigkeiten vermeiden.

Schiebt die Kolbenzylindereinheit 35 den Schweissstempelträger 33 um die Distanz d nach vorne, so werden die Schweissstempel 40 durch Durchführungsöffnungen 38 in den Andruckplatten 22 hindurch geschoben. Die Durchführungsöffnungen 38 sind so gross gestaltet, dass die Schweissstempel 40 mit grossem Spiel durch diese hindurch zu ragen vermögen. Hierbei müssen die Schweissstempel 40 allerdings nur mit dem eigentlichen Schweissstempelfinger 41 durch diese Oeffnungen hindurch greifen. Es ist dabei wesentlich, dass möglichst wenig Wärme der Schweissstempel 40 auf die Andruckplatte 22 übertragen wird. Aus diesem Grund zieht man die Schweissstempel 40 beziehungsweise den Schweissstempelträger 33 so weit zurück, dass die Schweissstempel während der Zeit, in der sie keine Schweissung erzeugen müssen, ausserhalb des Bereiches der Andruckplatte 22 liegen. Damit auch die Schweissstempelträgerplatte 33 sich nicht stark erhitzt, ist es von Vorteil, die Schweissstempelträgerplatte 33 aus einem Material zu fertigen, welches geringe Wärmespeichereigenschaften und eine geringe Wärmeleitfähigkeit aufweist. Hierfür kommen diverse Kunststoffe in Frage.

Mit Bezug auf die Figur 4 wird nachfolgend der eigentliche Schweissstempel 40 erläutert. Der Schweissstempel 40 besteht aus einem Schweissstempelfinger 41 der einstückig mit einer daran axial fluchtenden Hülse 42 gefertigt ist. Diese Hülse 42 weist zwei einander diametral gegenüberliegende Längsschlitze 43 auf. In die Hülse 42 lässt sich mit Spiel ein Heizelement 44 einschieben. Sobald dieses bis zum Anschlag in die Hülse 42 eingeschoben ist, zieht man die Feststellschrauben 46 eines auf der Hülse 42 sitzenden Klemmringes 45 an. Hierdurch erhält man annähernd einen Passsitz mit entsprechend guter Wärmeleitung zwischen Hülse 42 und dem Heizelement 44. Das freie Ende des Heizelementes 44 ist mit einem Schraubkopf 47 versehen, der einen Gewindeanteil und einen Sechskantkopf aufweist. Endseitig ragen aus dem Schraubkopf 47 mehrere Anschlussdrähte, die einerseits für den Heizstrom und andererseits für einen im Heizelement 44 integrierten Temperaturmesssondenteil dienen.

Um ein Verkleben des Schweissstempels zu vermeiden, versieht man vorteilhafterweise mindestens den Schweissstempelfinger 41 und eventuell teilweise die Hülse 42 mit einer Antihaftbeschichtung, beispielsweise aus PTFE.

Nachfolgend sei das erfindungsgemässe Verfahren nochmals kurz zusammengefasst in den einzelnen Schritten beschrieben. Die zugeschnittenen und mittels entsprechender Leit- und Führungsbleche zusammengelegten Schachteln 1 kommen in eine oder mehrere Schweissstationen. Hier wird als erstes die auf der Schachtelinnenwand zu liegen kommende Andruckplatte 23 mittels dem Zylinder 24 vorgeschoben, bis die hochgeklappte laschenfreie Seitenwand an die dort aussen anliegenden Laschen 8 anliegt. Diese Anlage kann praktisch druckfrei oder mit geringem Druck erfolgen. Hierbei werden die Stege 5 nicht verformt. Im nächsten Schritt werden die Schweissstempel 40 vorgeschoben, indem die Kolbenzylindereinheit 35 die Schweissstempelträgerplatte 33 nach vorne schiebt. Diese Verschiebung um die Distanz d ist so weit, dass die Schweissstempel 40 durch Durchführungsöffnungen 38 in der Andruckplatte 22 hindurch vorgeschoben werden, wobei die Eindringtiefe der Schweissstempelfinger 41 praktisch in etwa anderthalb Mal der Dicke der Kunststoffplatten 2 entspricht. Dabei wird das thermoplastische Material verformt und erweicht bis es zur entsprechenden Materialverschweissung kommt. Hierbei besteht der grosse Vorteil darin, dass kein Fremdmaterial benötigt wird und auch keine Verdampfung auftritt. Selbstverständlich ist die Temperatur auch so niedrig gehalten, dass keine Verbrennungen auftreten und somit auch keine Rauchentwicklung entsteht. Die hierbei entstehenden Schweissverbindungen 10 führen im Kopfbereich respektive am unteren Ende zu einer grösseren Materialansammlung, so dass hierdurch eine Art druckknopfartige Verbindung entsteht. Reisst man diese Verbindung auf, so hat man in der Seitenwand 9 Löcher in der Folienlage 4, während die Folienlage 3 der laschenfreien Seitenwand 9 völlig unberührt ist. Erstaunlicherweise bildet sich hingegen an der Lasche 8 ein Kopf, der relativ fest mit der Lasche verbunden ist. Dies führt dazu, dass eine derart hergestellte Verbindung, wenn sie mutwillig zerstört wird, sich nachträglich jedoch wieder zu einer Art form- und kraftschlüssigen Verbindung schliessen lässt. Dies lässt daran denken, durch entsprechende Optimierung die Verbindung so zu gestalten, dass auf diese Weise eine Mehrfachverwendung einer solchen Schachtel denkbar ist, wobei vor dem Leertransport die Verbindung einfach aufgerissen wird, so dass wiederum ein flacher Zuschnitt zurück zum Abpackbetrieb gelangen kann.

### Liste der Bezugszahlen

- 1: Schachtel
- 2: Kunststoffplatte
- 3: Folienlage oben
- 4: Folienlage unten
- 5: Stege
- 6: Boden- oder Deckfläche
- 7: Seitenwand mit Lasche
- 8: Lasche
- 9: laschenfreie Seitenwand
- 10: Verbindung
- 20: Vorrichtung
- 21: Führungs- und Haltewinkelformbleche
- 22: Andruckplatte für Aussenwand, ortsfest
- 23: Andruckplatte für Innenwand, beweglich
- 24: Andruckzylinder
- 30: Schweisseinheit
- 31: Jochplatte
- 32: seitliche Träger
- 33: Schweissstempelträger
- 34: Führungsstangen
- 35: Kolbenzylindereinheit
- 36: verstellbarer Anschlag
- 37: fester Gegenanschlag
- 38: Durchführungsöffnung
- 39: Buchsen
- 40: Schweissstempel
- 41: Schweissstempelfinger
- 42: Hülse
- 43: Langschlitze diametral
- 44: Heizelement
- 45: Klemmring
- 46: Feststellschrauben
- 47: Schraubkopf
- 48: Anschlussdrähte für Heizstrom und Messsonde

## Patentansprüche

1. Verfahren zum Herstellen von Schachteln (1), insbesondere unter Reinraumbedingungen in einer Tubenabpacklinie, die aus stranggepressten, mindestens zwei Folienlagen (3, 4) mit dazwischen verlaufenden Stegen (5) aufweisenden thermoplastischen Kunststoffplatten (2) bestehen, wobei der Zuschnitt so gestaltet ist, dass zwei einander gegenüberliegende Seitenwände (7) mit Laschen (8) versehen sind, die im fertigen Zustand die jeweils benachbarten laschenfreien Seitenwände (9) überlappen, **dadurch gekennzeichnet, dass** während der Erstellung der Verbindung (10) jeweils eine Lasche (8) und die benachbarte Seitenwand (9) zwischen zwei nicht beheizten Andruckplatten (22, 23) lagefest gehalten sind und danach durch mindestens eine der beiden Andruckplatten (22) hindurch mindestens ein fingerförmiger Schweissstempel (40) hindurch geschoben wird, der um mehr als die Dicke einer Kunststoffplatte (2) in den Überlappungsbereich vorgeschoben wird und mindestens eine punktuelle Schweissverbindung (10) zwischen den beiden Plattenteilen erzielt.

2. Verfahren nach Anspruch 1, **dadurch gekennzeichnet, dass** mittels drei fingerförmiger Schweissstempel (40) drei in Dreiecksform angeordnete punktuelle Schweissstellen (10) erstellt werden.

3. Verfahren nach Anspruch 2, **dadurch gekennzeichnet, dass** alle drei punktuellen Schweissstellen (10) gleichzeitig erstellt werden.

4. Vorrichtung (20) zum Herstellen von Schachteln (1), insbesondere unter Reinraumbedingungen in einer Tubenabpacklinie, die aus stranggepressten, mindestens zwei Folienlagen (3, 4) mit dazwischen angeordneten Stegen (5) aufweisenden thermoplastischen Kunststoffplatten (2) bestehen, wobei der Zuschnitt so gestaltet ist, dass zwei einander gegenüberliegende Seitenwände (7) mit Laschen (8) versehen sind, die im fertigen Zustand die jeweils benachbarten laschenfreien Seitenwände (9) überlappen, wobei die Vorrichtung mindestens eine auf der Schachtelinnenwand zum Anliegen kommende Andruckplatte (23) und eine auf der Schachtelaussenwand zum Anliegen kommende Andruckplatte (22) aufweist, **dadurch gekennzeichnet, dass** mit einer der Andruckplatten (22) eine Schweisseinheit (30) verbunden ist, die mindestens einen fingerförmigen Schweissstempel (40) umfasst, der relativ zur Andruckplatte (22) berührungsfrei durch diese hindurch bewegbar ist.

5. Vorrichtung nach Anspruch 4, **dadurch gekennzeichnet, dass** die Schweisseinheit (30) eine in fester Relation mit der Andruckplatte (22) parallel dazu verlaufende Jochplatte (31) umfasst, welche von darin gleitend gelagerten Führungstangen (34) durchsetzt ist, welche einen Schweissstempelträger (33) halten, auf den der mindestens eine Schweissstempel (40) fest angeordnet ist und dass der Schweissstempelträger (33) mittels einer sich auf der Jochplatte (31) abstützenden Kolbenzylindereinheit (35) steuerbar verschiebbar ist.

6. Vorrichtung nach Anspruch 5, **dadurch gekennzeichnet, dass** an mindestens einer der Führungsstangen (34) ein verstellbarer Anschlag (36) angeordnet ist, mittels dessen die Eindringtiefe (d) des mindestens einen fingerförmigen Schweissstempels (40) in die zu verbindenden thermoplastischen Kunststoffplattenteile einstellbar ist.

7. Vorrichtung nach Anspruch 5, **dadurch gekennzeichnet, dass** der Schweissstempelträger (33) aus einem Material, welches eine geringe Wärmespeicherfähigkeit und/oder Wärmeleitfähigkeit hat, gefertigt ist.

8. Vorrichtung nach Anspruch 5, **dadurch gekennzeichnet, dass** der Schweissstempelträger (33) drei in Dreiecksanordnung montierte Schweissstempel (40) aufweist.

9. Vorrichtung nach Anspruch 5, **dadurch gekennzeichnet, dass** der Schweissstempelträger (33) fünf Schweissstempel umfasst, wobei vier in Rechteckanordnung befestigt sind, während der fünfte im Diagonalschnittpunkt liegt.

10. Vorrichtung nach Anspruch 4, **dadurch gekennzeichnet, dass** die äussere Andruckplatte (22) so rechtwinklig abgebogen ist, dass sie an zwei benachbarten Seitenwänden (7, 9) anliegt.

11. Vorrichtung nach Anspruch 4, **dadurch gekennzeichnet, dass** die Vorrichtung zwei Winkelformbleche (21) aufweist, welche die zu erstellende Schachtel (1) an zwei Ecken führen und lagestabil während der Schweissung halten.

12. Vorrichtung nach Anspruch 4, **dadurch gekennzeichnet, dass** der mindestens eine Schweissstempel (40) einen Schweissstempelfinger (41) mit daran anschliessender Hülse (42), in der ein Heizelement (44) eingeschoben und gehalten (45, 46) ist, umfasst.

13. Vorrichtung nach Anspruch 12, **dadurch gekennzeichnet, dass** der mindestens eine Schweissstempel mit einem Heizelement (44) mit integrierter Temperaturmesssonde ausgerüstet ist.

14. Vorrichtung nach Anspruch 4, **dadurch gekennzeichnet, dass** die Andruckplatte (22), welche von dem mindestens einen Schweissstempel durchsetzt (38) wird, ortsfest angeordnet ist.

15. Vorrichtung nach Anspruch 12, **dadurch gekennzeichnet, dass** mindestens der Schweissstempelfinger (41) mit einer Antihaftbeschichtung versehen ist.
